# EUROPEAN PATENT APPLICATION

(11) **EP 3 822 057 A1**
(43) Date of publication of application: **19.05.2021**
(21) Application number: 20207270.8
(22) Date of filing: 12.11.2020
(51) Int. Cl.: B29C 45/00, B29C 45/32, B65B 61/18, B65D 5/74, B67B 7/00, B29C 45/42, B29L 31/56, B29C 45/26, B29C 45/33

(54) **METHOD OF MOLDING AND ASSEMBLING AT LEAST ONE CLOSING DEVICE AND MANUFACTURING SYSTEM THEREOF**

(30) Priority: 12.11.2019 IT 201900020988
(71) Applicant: Easy Plast S.r.l., 63073 Offida (AP) (IT)
(72) Inventor: SILLA, Roberto, 63073 Offida (AP) (IT); MICHETTI, Luigino, 63073 Offida (AP) (IT)
(74) Representative: Mignini, Davide Giuseppe

(57) **Abstract**

Method of molding and assembling at least one closing device (10) of the type that can be constrained to a container (100) for pourable products at a pierceable portion (101) thereof, said closing device comprising a collar (11) combinable with said pierceable portion, a cap (12) combinable with the outer surface (11a) of said collar (11), and a movable cutting element (13) for severing, when the device is assembled, said pierceable portion (101), said method comprising the steps of:
a) obtaining said collar, said cutting element and said cap of said at least one closing device by means of an injection molding plant;
b) assembling said collar, said cutting element and said cap with one another for forming said closing device by means of a reciprocal pushing operation thanks to an assembling unit (4);
characterized by comprising the step of c) transferring said collar, said cutting element and said cap directly from said molding plant (2) to said assembling unit (3) by means of a transferring unit (4), once said collar, said cutting element and said cap have been made in said step a).

## Description

### FIELD OF THE INVENTION

The present invention concerns a method of molding and assembling at least one closing device and respective molding plant. In particular, such method is applied for the injection molding of closing devices comprising a collar, an upper cap (or top), and a cutting element arranged, when the device is assembled, inside the aforementioned collar.

### KNOWN ART

According to the art, closing devices of this kind are known, which closing devices are combinable with containers for pourable products and which, in turn, comprise a collar provided with a flange whose lower side is glued to the aforementioned container for pourable products, a cap combinable with the outer surface of the collar, and a cutting element movable, when the device is assembled, inside the collar along a guide of the helical type, for example, at the first opening of the container, i.e. when the cap is unscrewed from the collar. The cutting element is further provided with a plurality of teeth for severing the pierceable portion of the container when it is activated for the first time. The cutting element, the collar and the cap are substantially cylindrical in shape and concentric to one another when assembled.

Closing devices of this kind are known in the art.

For example, the document WO9505996A1 in the name of International Paper Company describes a closing device of the type mentioned above. In this closing device, the collar, the cap (or top) and the cutting element are made separately, through three different molds of the type each comprising a press where the injection molding occurs according to the conventional art.

Still, the document EP1088764 B1 in the name of Tetra Laval describes a closing device similar to the one described in the patent WO9505996A1, however, in this case, the collar and the cutting element are made in one piece, through a single mold. In particular, the upper end of the cutting element is connected to the lower end of the collar, thus achieving a semi-finished product. Also the document EP1976764 of Deltona Innovation AG describes a closing device similar to the one described in the patent EP1088764 B1, however, this document teaches how to mold the cutting element together with the collar and with the cutting element arranged above the collar. This document then explains how the closing device is assembled. In particular, the document explains that the semi-finished product consisting of the collar and the cutting element is laid on a conveyor belt. A means for overturning each semi-finished product is placed along such conveyor so that to be leant against the flange of the collar on the conveyor belt at the end of such process. Finally, a second conveyor belt arranged facing the first conveyor belt but not parallel to it, but rather tilted so that a pushing force is generated between the cutting element and the collar as the semi-finished product gradually advances so that to insert the cutting element into the collar. Successively the cap will be combined with the collar, already provided with the cutting element, by pushing. Generally, such operation is achieved by appropriately orienting the cap with respect to the cutting element. In fact, the rotation of the cutting element caused by the cap at the first opening of the container must occur so that to allow the cutting of the pierceable portion within an angular interval between 300° and 330°. This allows to prevent either the pierceable portion from being completely cut, thus falling into the container, or the pierceable portion from not being cut enough, thus limiting the flow of the liquid to be poured or, in the worst cases, completely preventing the pouring.

The solutions described above anyhow require that the assembling of the various parts constituting the closing device occurs after such parts were left to "rest" for a few hours, or days, after having been formed by injection molding, so that the fibers constituting their plastic matrix are completely stretched out and ready to be combined with the other parts.

However, the solutions described above have drawbacks. First of all, the tolerances must be kept rather loose to allow the coupling between collar, cutting element and cap. In fact, the coupling by pushing between the various components can suffer excessive tensions such as to damage the profiles of the various components which are necessarily forced to brush against one another. This can lead to the formation of very small fragments which remain in the device. Then, when the device is activated for the first time, such fragments can fall inside the container, thus mixing with the content. This is clearly not very desirable and highly harmful to the health of the consumer.

Moreover, the assembling method is rather complicated and requires much time and enormous precision, especially for the angular orientation of the various components.

Finally, in the event of small molding errors in one of the three components (two in the event of semi-finished product consisting of the cutting element and the collar molded together), the methods of the known art do not allow to easily find the damaged mold since the top, or cap, is assembled to a collar and to a cutting element that do not always come from the same molding cavity. Thus, it can sometimes be difficult to identify which cavities, of the multiple mold cavities used to make the collar, the cap and the cutting element, are worn to the point of requiring their maintenance and/or replacement. Object of the present invention is to implement a method of molding and assembling a closing device that is simple and that simultaneously allows to keep closer tolerances between the various components without risking to damage the profiles of the top, collar and cutting element.

Further object of the present invention is to implement a method of molding and assembling a closing device that is quick and simpler than that of the known art.

Finally, object of the present invention is to implement a plant that allows to solve the drawbacks of the known art and that simultaneously allows to implement the method according to the invention.

These and further objects are achieved by means of a method of molding and assembling at least one closing device of the type that can be constrained to a container for pourable products at a pierceable portion thereof, said closing device comprising a collar combinable with said pierceable portion, a cap combinable with the outer surface of said collar, and a movable cutting element for severing, when the device is assembled, said pierceable portion, said method comprising the steps of:
a) obtaining said collar, said cutting element and said cap of said at least one closing device by means of an injection molding plant;
b) assembling said collar, said cutting element and said cap with one another for forming said closing device by means of a reciprocal pushing operation thanks to an assembling unit;
characterized by comprising the step of c) transferring said collar, said cutting element and said cap directly from said molding plant to said assembling unit by means of a transferring unit, once said collar, said cutting element and said cap have been made in said step a).

The owner has in fact noticed that, contrarily to what occurs for the closing devices of the known art wherein the assembling of the various parts, i.e. the collar, the cap and the cutting element, occurs hours, or days, after the injection molding of these elements, the method described herein allows to achieve such assembling of the various components of the closing device just a few seconds after their injection molding. In practice, by exceeding a technological prejudice, the owner noticed that, in doing so, the shrinkage of the fibers of the various elements constituting the closing device, i.e. the collar, the cap and the cutting element, occurs contemporaneously in the assembled device, thus resulting in being able to work also with very close tolerances and without the risk of having small breakages of elements as occurs with cold assemblies, i.e. after having left the various elements to rest for hours, or days, after the molding.

According to the invention, said step c) occurs in a time interval of less than 120 sec. Preferably, such interval is less than 60 seconds, and is even more preferably less than 30 seconds. Within such time interval, the fibers of the molded elements have not yet shrunk, thus the shrinking of the material of said collar, said cutting element and said cap occurs after the assembling and contemporaneously in all three components.

Moreover, said steps b) and/or c) occur through linear movements of said collar, said cutting element and said cap of said at least one closing device.

Still, said step a) comprises the step of a1) injection molding said collar, said cap and said cutting element so that, at the end of the molding step, they are concentrically aligned to one another along a longitudinal axis.

Preferably, said step c) occurs through at least one first linear movement for the coming out of said collar, said cutting element and said cap from said injection molding plant to reach said assembling unit, wherein said cutting element, said cap and said collar remain concentrically aligned to one another along a longitudinal axis during said step c).

This considerably facilitates their successive assembly during step b) of the method.

Still, said step b) occurs through a second linear movement between said collar, said cutting element and said cap, wherein said collar, said cutting element and said cap are concentrically aligned to one another along said longitudinal axis.

Advantageously, during said steps b) and/or c), said collar, said cutting element and said cap can be reciprocally rotated to one another around said longitudinal axis, for reciprocally orientating themselves.

Moreover, said at least one first linear movement is orthogonal to said second linear movement.

Finally, in an injection molding plant comprising at least one press in turn comprising at least one fixed element and one or more movable elements movable, with respect to said at least one fixed element, between a first open position of said press, for allowing the extraction of said collar, said cap and said cutting element from said at least one press, and a closed position of said press, for allowing the injection molding of said collar, said cap and said cutting element, it advantageously occurs that, during said step a), said one or more movable elements move with respect to said fixed element along a linear direction parallel to, or coincident with said longitudinal axis.

Always according to the invention, the objectives are achieved by means of a system for manufacturing at least one closing device of the type that can be constrained to a container for pourable products at a pierceable portion thereof, said closing device comprising a collar combinable with said pierceable portion, a cap combinable with the outer surface of said collar, and a movable cutting element for severing, once the device is assembled, said pierceable portion, said manufacturing system comprising at least one injection molding plant for molding said collar, said cutting element and said cap of said at least one closing device and at least one assembling unit for assembling said collar, said cutting element and said cap, for forming said closing device, characterized by comprising a robotized transferring unit for transferring said collar, said cutting element and said cap of said at least one closing device from said molding plant directly to said one assembling unit. Preferably, such transfer occurs in a time interval of less than 120 sec. Preferably, such interval is less than 60 seconds, and is even more preferably less than 30 seconds. Within such time interval, the fibers of the molded elements have not yet shrunk, thus the shrinking of the material of said collar, said cutting element and said cap occurs after the assembling and contemporaneously in all three components.

Advantageously, said transferring unit comprises a plurality of gripping arms for being able to grab said collar, said cutting element and said cap and to displace them through at least one first linear movement outside of said molding plant, for transferring said collar, said cutting element and said cap to said assembling unit, wherein said collar, said cap and said cutting element remain concentrically aligned to one another along a longitudinal axis during said at least one first linear movement.

Moreover, said assembling unit comprises means for assembling said collar, said cutting element and said cap for forming said closing device by means of a reciprocal pushing operation, wherein said push occurs through a second linear movement between said collar, said cutting element and said cap, wherein said cutting element, said collar and said cap are concentrically aligned to one another along said longitudinal axis during said second linear movement.

Finally, said gripping arms and/or said assembling means are further adapted to rotate said collar and/or said cutting element and/or said cap around said longitudinal axis, for allowing their reciprocal orientation. During such operation, the cap, the collar and the cutting element of each closing device anyhow remain arranged concentrically aligned to one another.

Some particular embodiments of the present invention will now be described by way of example only and without limitations with respect to the accompanying figures, in which:
figure 1 is an axonometric view of the manufacturing system according to the invention;
figures 2a-2f are cross-sectional views of the press of the molding plant in various steps of the implementation method of the closing device according to the invention;
figures 2g-2l are axonometric views particularly of the assembling unit and the transferring unit in various steps of the method according to the invention;
figures 3a-3b show respectively, in longitudinal section, a closing device to be assembled, and assembled and mounted on the upper face of a container.

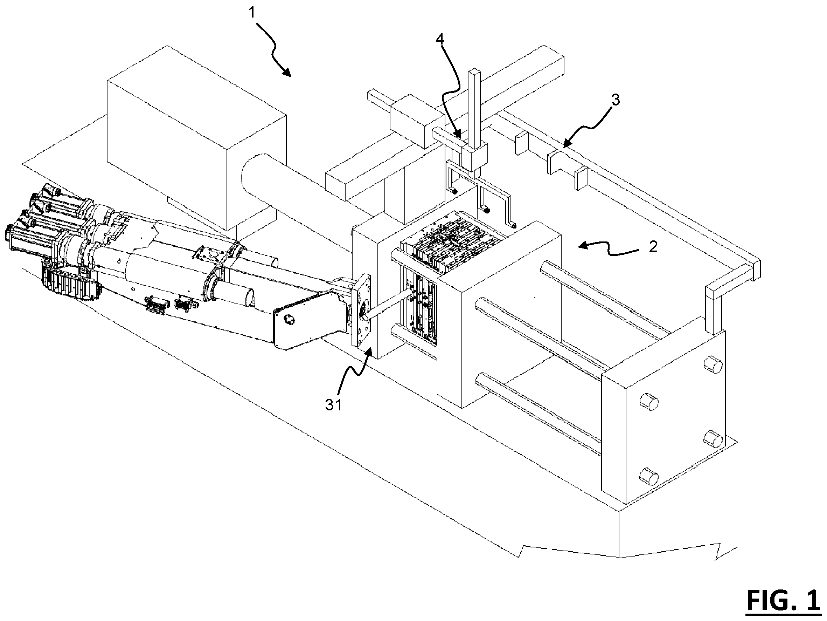

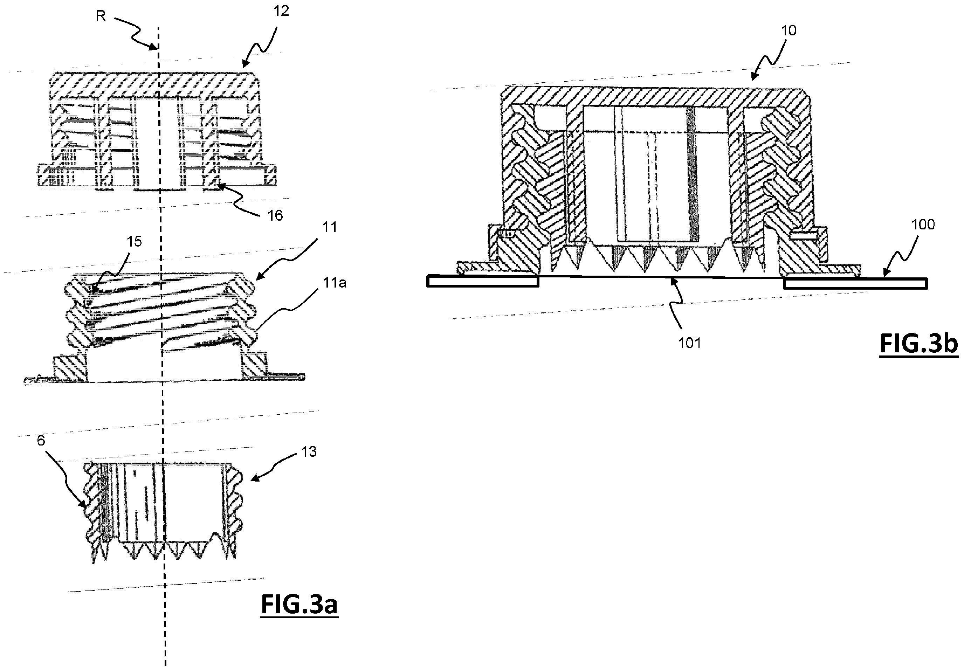

With particular reference to such figures, 1 denotes the generic manufacturing system according to the invention. Such manufacturing system 1, shown as a whole in figure 1, is used for making a plurality of closing devices 10 shown in figures 3a and 3b. For the purpose of simplifying the description of the invention as much as possible, it should be observed that, in figure 1 and in the successive ones, the manufacturing system 1 is depicted able to make a single closing device 10, however such system 1 is developed to also contemporaneously make twenty-four or thirty-six or more closing devices 10 at each molding cycle. In general, the generic closing device 10 made by means of such plant 1 is of the type that can be constrained to a container 100 for pourable products (only partially shown in figure 3b) at a pierceable portion 101 thereof. Each of the closing devices 10 manufactured by the manufacturing system 1 comprises a collar 11 combinable with the pierceable portion 101 of the container 100, a cap 12 (or top) combinable with the outer surface 11a of the collar 11, and a movable cutting element 13 for severing, once the device 10 is assembled, the pierceable portion 101. In particular, the cutting element 13 is movable, when the device 10 is assembled, inside the collar 11 in a constrained way by guiding means 15 interposed between the cutting element 13 and the collar 4. The activation of the cutting element 13 is achieved at the first opening of the device 10, when the cap 12 is rotated for the first time. Such cap 12 is provided with appropriate pushing means 16 able to push the cutting element 13 along the aforementioned guiding means 15 for reaching and piercing the pierceable portion 101 of the container 100.

The manufacturing system 1 comprises an injection molding plant 2 for molding the collar 11, the cutting element 13 and the cap 12 of each closing device 10 to be made and an assembling unit 3 for assembling the collar 11, the cutting element 13 and the cap 12, to form each of the generic closing devices 10 made during the molding step by means of the plant 2.

According to the invention, such system 1 comprises a robotized transferring unit 4 for transferring the collar 11, the cutting element 13 and the cap 12 of each closing device 10 made by the molding plant 2 directly to the assembling unit 3.

Such transfer preferably occurs in a time interval of less than 120 sec. Within such time interval, the fibers of the molded elements have not yet shrunk, thus the shrinking of the material of said collar 11, said cutting element 13 and said cap 12 occurs after the assembling and contemporaneously in all three components.

In practice, the collar 11, the cutting element 13 and the cap 12 of each closing device 10 are not stored for hours, or days, after having been molded by the molding plant 1, as occurs in the plants of the known art, but are immediately assembled by the assembling unit 3.

The owner has in fact noticed that, contrarily to what occurs for the closing devices of the known art wherein the assembling of the various parts, i.e. the collar, the cap and the cutting element, occurs hours, or days, after the injection molding of these elements, the plant 1 allows to achieve such assembling of the various components of the closing device 10, preferably within 120 seconds from their injection molding, still more preferably within 60 seconds and even more advantageously within 30 seconds. In practice, by exceeding a technological prejudice, the owner noticed that, in doing so, the shrinkage of the fibers of the various elements constituting the closing device 10, i.e. the collar 11, the cap 12 and the cutting element 13, occurs contemporaneously when the device 10 is assembled, thus also making it possible to work with very close tolerances and without the risk of having small breakages of elements as occurs with cold assemblies, i.e. after having left the various elements to rest for hours, or days, after the molding.

According to the invention, the molding plant 2 comprises a press 30 having a fixed element 31 and a plurality of movable plate-shaped elements 32. In particular, in the embodiment described herein, the number of movable elements 32 is of nine elements, however, the number of movable elements depends on the number of elements to be molded and on the type of press 30 adopted, thus a press 30 useful for making one or more closing devices 10 each equipped with a collar 11, a cutting element 13 and a cap 12, and having a number of movable elements 32 different from that depicted in the accompanying figures, would anyhow fall within the protection scope of the present invention. Such movable elements 32 move, with respect to the fixed element 31, between a first open position P1 of the press 30, for allowing the extraction of the collar 11, the cap 12 and the cutting element 13 of each closing device 10 from the press 30, and a closed position P2 of the press 30, for allowing the injection molding of the collar 11, the cap 12 and the cutting element 13 of each closing device 10 manufactured. In particular, the fixed element 31 and the movable elements 32 define, with the press 30 in the closed position P2, numerous first cavities 41 for molding the collar 11 (only two first cavities 41 placed at different heights can be seen in the figures) having a substantially cylindrical geometry, numerous second cavities 42 for molding the cap 12 (only two second cavities 42 placed at different heights can be seen in the figures) having a substantially cylindrical geometry, and numerous third cavities 43 for molding the cutting element 13 (only two third cavities 43 placed at different heights can be seen in the figures) having a substantially cylindrical geometry. According to the invention, each first cavity 41, each second cavity 42 and each third cavity 43 is arranged so that they are concentrically aligned to one another along a longitudinal axis L. In particular, the movable elements 32 move, with respect to the fixed element 31 of the press 30, along a linear direction X parallel to the longitudinal axis L. Such displacement is favored by four longitudinal rods 60 parallel to such longitudinal axis L.

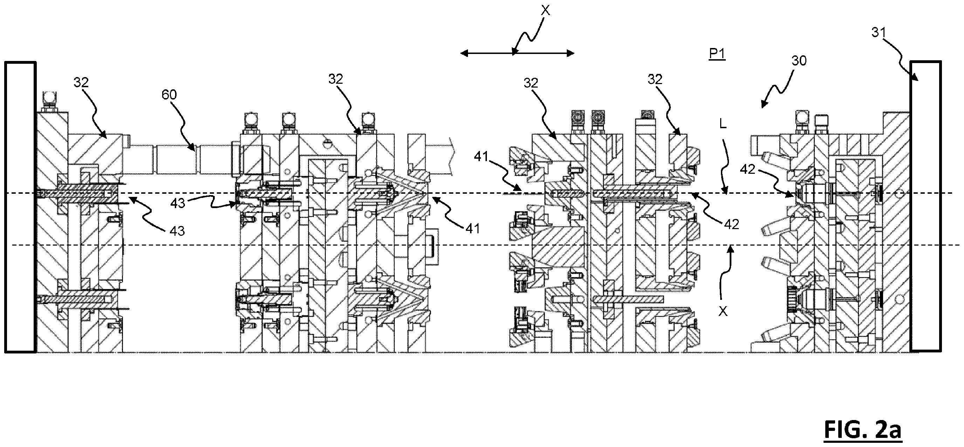

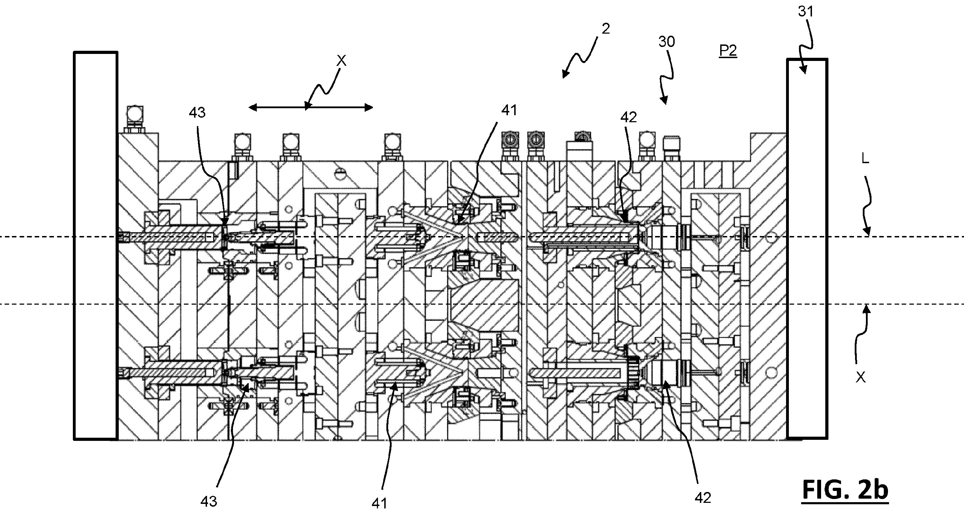

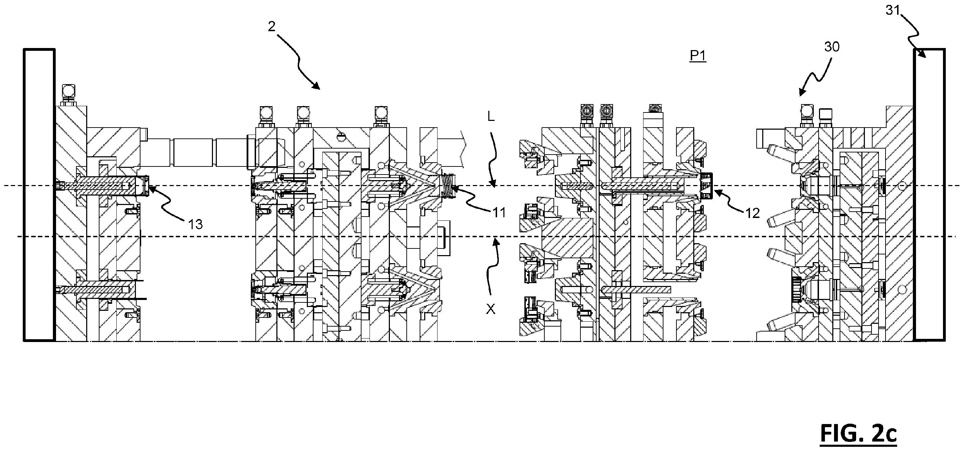

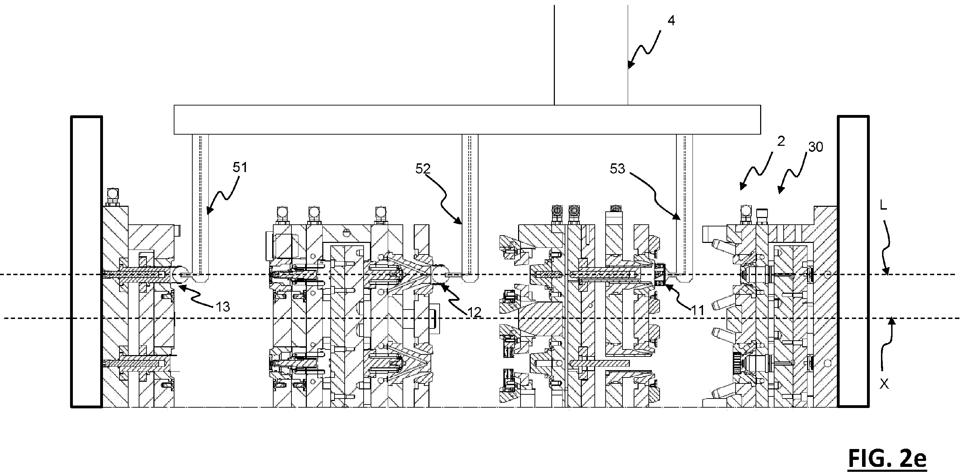

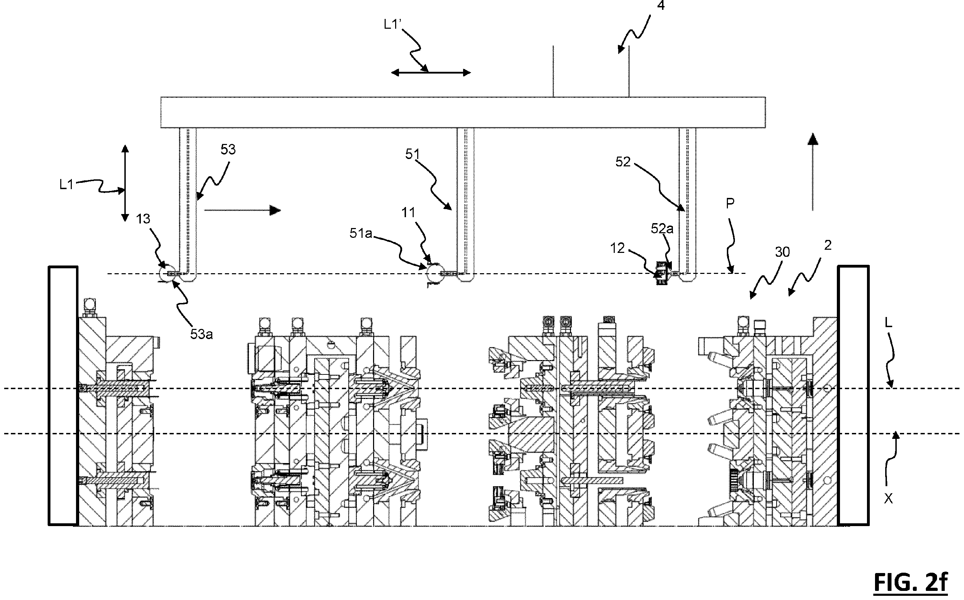

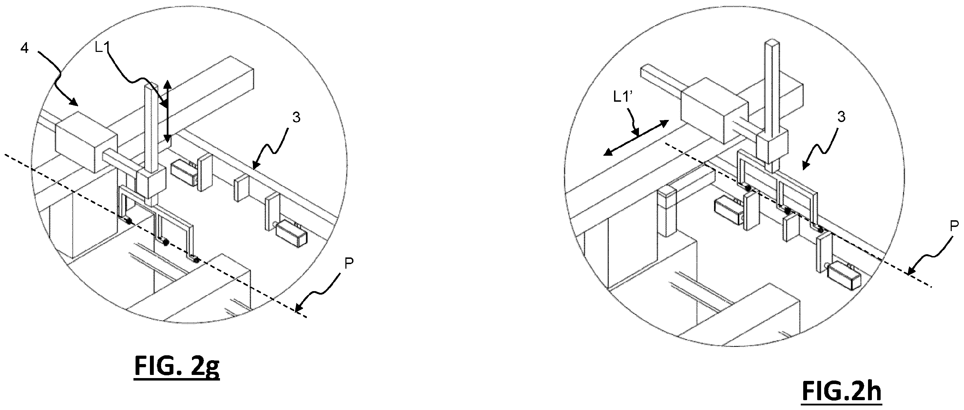

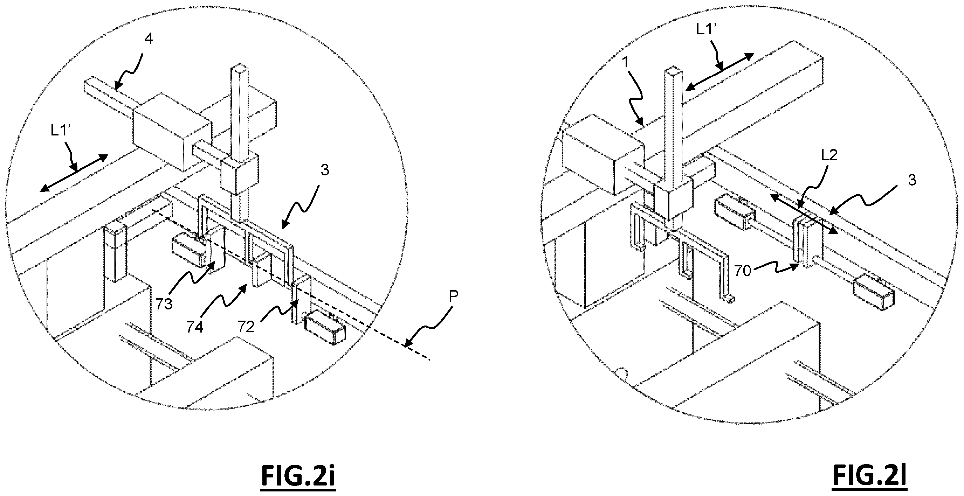

It should be observed that the first cavities 41, the second cavities 42 and the third cavities 43 are made, and shown in figure 2b, only when the press 30 is closed in its position P2.

It should further be mentioned that the longitudinal axis L of each first cavity 41, each second cavity 42 and each third cavity 43 coincides with the longitudinal axis P of the collar 11, the cap 12 and the cutting element 13, which are made within the respective cavity 41, 42 and 43. In fact, the collar 11, the cap 12 and the cutting element 13 are also arranged concentrically to one another once made by means of molding plant 2.

In the event of closing devices 10 wherein the collar 11 is made in one piece with the cutting element 13 (case not depicted in the accompanying figures but known to the technician of the field), then one or more first cavities 41 are needed (instead of a first and a third cavity), whereas the cap 12 is made inside a second cavity 42. In this case, the molding plant 2 comprises a press 30 having a fixed element 31 and a number of movable elements 32 that move, with respect to the fixed element 31, between a first open position P1 of the press 30, for allowing the extraction of the collar 11, the cap 12 and the cutting element 13 from the press 30, and a closed position P2 of the press 30, for allowing the injection molding of the collar 11, the cap, 12 and the cutting element 13. The fixed element 31 and the movable elements 32 define, with the press 30 in the closed position P2, at least one plurality of first cavities 41 for molding, in a semi-finished configuration, the collar 11 and the cutting element 13, which have a substantially cylindrical geometry, and a plurality of second cavities 42 for molding the cap 12 having a substantially cylindrical geometry. Each first cavity 41 and each second cavity 42 is arranged so that they are concentrically aligned to one another along a longitudinal axis L. The movable elements 32 move, with respect to the fixed element 31 of the press 30, along a linear direction X parallel to the longitudinal axis L. Although anyhow comprised in the protection scope of the present invention, such embodiment is not shown.

Also in this case, it should be mentioned that the longitudinal axis L of each first cavity 41 and of each second cavity 42 coincides with the longitudinal axis P of the collar 11, the cutting element 13 and the cap 12 that are made inside the respective cavity 41 and 42. In fact, the collar 11 and the cutting element 13, made with one another in one piece, and the cap 12 are also arranged concentrically to one another once made by means of the molding plant 2.

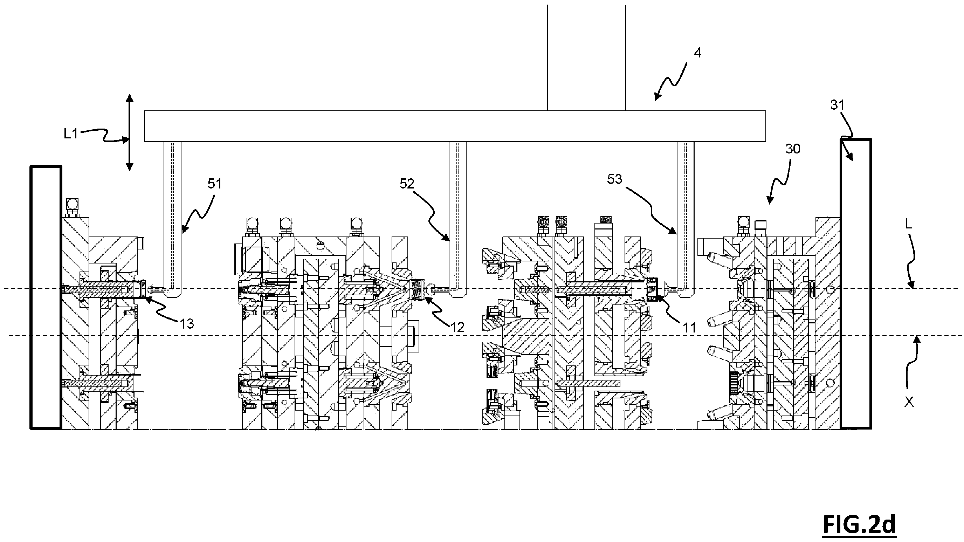

According to the invention, the transferring unit 4 comprises three gripping arms 51, 52, 53 for grabbing, respectively, the collar 11, the cap 12 and the cutting element 13 of each closing device 10 and to displace them through a first linear movement L1 outside of the molding plant 2, i.e. outside of the press 30 (see figures 2d-2i), for transferring the collar 11, the cap 12 and the cutting element 13 to the assembling unit 3. Advantageously, the collar 11, the cap 12 and the cutting element 13 remain concentrically aligned to one another along the aforementioned longitudinal axis P during the first linear movement L1. In the embodiment shown herein, during the path for reaching the assembling unit 3, a further first linear movement L1', orthogonal to the first linear movement L1, is performed so that to reach the assembling unit 3, thus avoiding the columns 60 of the press 30. It should however be mentioned that, in a further embodiment not shown herein, in which the assembling unit 3 is above the molding plant 2 or to the side of such molding plant 2 but at the same height of the movable elements 32, a single linear movement L1 is sufficient for transferring the collar 11, the cap 12 and the cutting element 13 of each device 10 made by the molding plant 2 to the assembling unit 3.

At the assembling unit 3, the collar 11, the cap 12 and the cutting element 13 of each device 10 are released by the robotized transferring unit 4 which, at this point, by performing the linear movements L1' and L1 in the opposite direction, heads towards the press 30 to grab the collar 11, the cap 12 and the cutting element 13 of each device 10 which, in the meantime, were manufactured by the injection molding plant 2. It should be specified that only three gripping arms 51, 52 and 53 of the robotized unit 4 are shown in the accompanying figures for simplicity, however, in reality the number of gripping arms is equal to the number of pieces to be moved. In practice, in the event of the manufacturing of fifty closing devices 10 at once, wherein each closing device comprises three pieces (collar, cutting element and cap), then, the number of arms of the robotized unit will be one hundred and fifty and all orderly arranged so that they take the collar, the cutting element and the cap of a single closing device 10 three by three.

In the event of the embodiment with only two cavities 41 and 42, with the collar 11 made integral with the cutting element 13, the gripping arms for each device 10 are only two in number instead of three.

It should be observed that each gripping arm 51, 52 and 53 grabs the collar 11, the cap 12 and the cutting element 13 by means of appropriate gripping elements 51a, 52a, 53a. In particular, in order to grab the cutting element 13 and the collar 12, the gripping elements 53a and 52a consist in a balloon expandable inside the respective element to be grabbed, whereas as far as the cap 12 is concerned, the gripping element 52a consists in a suction cup. It should be observed that the gripping elements 51a, 52a and 53a can also vary with respect to those described herein without thereby departing from the protection scope of the present invention. It should further be specified that, in order to grab the collar 11, the cap 12 and the cutting element 13, the gripping elements 51a, 52a, 53a are displaced towards and, then, away with respect to the collar 11, the cap 12 and the cutting element 13, thus making a brief linear reciprocating movement parallel to the axis X.

Finally, the assembling unit 3 comprises means 70 for assembling the collar 11, the cutting element 13 and the cap 12 by means of a reciprocal pushing operation, for forming the generic closing device 10. The push occurs through a second linear movement L2 between the collar 11, the cutting element 13 and the cap 12, wherein the cutting element 13, the collar 11 and the cap 12 remain concentrically aligned to one another along the longitudinal axis P. The assembling means 70 substantially consist in a press 71 consisting of two movable elements 72, 73 and a fixed 74 one reciprocally moving for allowing the coupling between the collar 11, the cap 12 and the cutting element 13 of each closing device 10 to be manufactured.

Also in this case it should be specified that, in order to release the collar 11, the cap 12 and the cutting element 13, the gripping elements 51a, 52a and 53a are displaced towards and, then, away with respect to the movable 72 and 73 and fixed 74 elements, thus making a linear reciprocating movement in direction of the second linear movement L2.

In an embodiment not described herein, the gripping arms 51a, 52a, 53a and/or the assembling means 70, in particular, the movable elements 72 and 73 and the fixed element 74, are also adapted to rotate the collar 11, the cutting element 13 and the cap 12 around the longitudinal axis P, for allowing their reciprocal orientation. This can also occur during the linear displacements L1 and/or L1' and/or L2.

The method of operating the molding and assembling plant 1 described above is depicted hereunder.

In particular, the method of molding and assembling a plurality of closing devices 10, each of which of the type that can be constrained to a container 100 for pourable products at a pierceable portion 101 thereof, wherein such closing device 10 comprises a collar 11 combinable with the pierceable portion 101, a cap 12 combinable with the outer surface 11a of the collar 11 and a movable cutting element 13 for severing, when the device is assembled, the pierceable portion 101. The method comprises the steps of:
a) making the collar 11, the cutting element 13 and the cap 12 of each closing device 10 to be manufactured, by means of the injection molding plant 1;
b) assembling the collar 11, the cutting element 13 and the cap 12 with one another of each closing device 10 to form the closing devices 10 by means of a reciprocal pushing operation;
wherein the method comprises the step of c) transferring the collar 11, the cutting element 13 and the cap 12 of each closing device 10 from the molding plant 2 directly to the assembling unit 3, by means of a robotized transferring unit 4.

Preferably, such step c) occurs in a time interval of less than 120 sec.

In specific, the steps b) and c) occur through linear movements of the collar 12, the cutting element 11 and the cap 12 of each closing device 10 made.

In specific, the step a) comprises the step of a1) injection molding the collar 11, the cap 12 and the cutting element 13 of each closing device 10 so that, at the end of the molding step a), the collar 11, the cap 12 and the cutting element 13 of each closing device 10 made are concentrically aligned to one another along a longitudinal axis P.

Moreover, in specific, the step c) occurs through a first linear movement L1 for the coming out of the collar 11, the cutting element 13 and the cap 12 of each closing device 10 from the injection molding plant 2, for transferring the collar 11, the cap 12 and the cutting element 13 of each closing device 10 directly from the injection molding plant 2 to the assembling unit 3. In particular, the cutting element 13, the cap 12 and the collar 11 of each closing device 10 manufactured remain concentrically aligned to one another along a longitudinal axis P during the entire first linear movement L1, during step c).

The step c), in the embodiment of the invention shown herein, also comprises a further first linear movement L1' for reaching the assembling unit 3. Such further first linear movement L1' is orthogonal to the first linear movement L1. It should be observed that, in other embodiments of the invention, the step c) can further comprise only one first movement L1, for example for the lateral displacement of the collar 11, the cutting element 13 and the cap 12 with respect to the molding plant 2, without thereby departing from the protection scope of the present invention.

Still, the step b) occurs through a second linear movement L2 between the collar 11, the cutting element 13 and the cap 12 of each closing device 10, wherein the collar 11, the cap 12 and the cutting element 13 are concentrically aligned to one another along the longitudinal axis P.

Still, according to a preferred embodiment, during steps b) and/or c), the collar 11, the cutting element 13 and the cap 12 are reciprocally rotated to one another around the longitudinal axis P, for reciprocally orienting themselves.

Advantageously, the first linear movement L1 is orthogonal to the second linear movement L2. In the event of a further first linear movement L1', the latter is orthogonal to both the first linear movement L1 and the second linear movement L2.

Advantageously, the cap 12, the cutting element 13 and the collar 11 of each closing device 10 will always be made by the same cavities 41, 42, 43 of the press 30 and will, thus, be easy to track down. It thus will no longer be possible for the cap (or top) for example, coming out of a particular cavity of the mold, to be coupled to a collar, or a cutting element, made in any cavity of the same molding plant or of another mold or molding plant, as occurs in the production method of the known art. Therefore, in the event of small molding errors in one of the three components (two in case of semi-finished product consisting of a cutting element and a collar molded together), it is extremely easy to find the damaged cavity and to thus provide to its maintenance and/or replacement.

Finally, in an injection molding plant 2 comprising a press 30 having a fixed element 31 and a plurality of movable elements 32 movable with respect to the fixed element 30, between a first open position P1 of the press 30, for allowing the extraction of the collar 11, the cap 12 and the cutting element 13 from the press 30, and a closed position P2 of the press, for allowing the injection molding of the collar 11, the cap 12 and the cutting element 13, during step a), the movable elements 32 move, with respect to the fixed element 31, along a linear direction X parallel to the longitudinal axis P (or to the longitudinal axis L when considering the longitudinal axis of the cavities 41, 42 and 43 concentrically aligned to one another right along such longitudinal axis L).

## Claims

1. Method of molding and assembling at least one closing device (10) of the type that can be constrained to a container (100) for pourable products at a pierceable portion (101) thereof, said closing device comprising a collar (11) combinable with said pierceable portion, a cap (12) combinable with the outer surface (11a) of said collar (11), and a movable cutting element (13) for severing, when the device is assembled, said pierceable portion (101), said method comprising the steps of:
a) obtaining said collar, said cutting element and said cap of said at least one closing device by means of an injection molding plant (2);
b) assembling said collar, said cutting element and said cap with one another for forming said closing device by means of a reciprocal pushing operation thanks to an assembling unit (4);
**characterized by** comprising the step of c) transferring said collar, said cutting element and said cap directly from said molding plant (2) to said assembling unit (3) by means of a transferring unit (4), once said collar, said cutting element and said cap have been made in said step a).

2. Method according to claim 1, **characterized in that** said step c) occurs in a time interval of less than 120 sec.

3. Method according to claim 1 or 2, **characterized in that** said steps b) and/or c) occur through linear movements of said collar, said cutting element and said cap of said at least one closing device.

4. Method according to one or more of claims 1 to 3, wherein said step a) comprises the step of a1) injection molding said collar (11), said cap (12) and said cutting element (13) so that, at the end of the molding step a), they are concentrically aligned to one another along a longitudinal axis (L).

5. Method according to one or more of claims 1 to 4, **characterized in that** said step c) occurs through at least one first linear movement (L1, L1') for the coming out of said collar, said cutting element and said cap from said injection molding plant (2), for transferring said collar, said cutting element and said cap from said molding plant to said assembling unit, wherein said cutting element, said cap and said collar remain concentrically aligned to one another along a longitudinal axis (P) during said step c).

6. Method according to one or more of claims 1 to 5, **characterized in that** said step b) occurs through a second linear movement (L2) between said collar, said cutting element and said cap, wherein said collar, said cutting element and said cap are concentrically aligned to one another along said longitudinal axis (P).

7. Method according to claim 5 or 6, **characterized in that** during said steps b) and/or c), said collar, said cutting element and said cap are reciprocally rotated to one another around said longitudinal axis (P), for reciprocally orientating themselves.

8. Method according to one or more of claims 1 to 7, **characterized in that** said at least one first linear movement (L1) is orthogonal to said second linear movement (L2).

9. Method according to one or more of claims 1 to 8, wherein said injection molding plant (2) comprises at least one press (30) comprising at least one fixed element (31) and one or more elements (32) movable, with respect to said at least one fixed element, between a first open position (P1) of said press, for allowing the extraction of said collar (11), said cap (12) and said cutting element (13) from said at least one press (30), and a closed position (P2) of said press, for allowing the injection molding of said collar (11), said cap (12) and said cutting element (13), **characterized in that**, during said step a), said one or more movable elements (32) move with respect to said fixed element (31) along a linear direction (X) parallel to, or coincident with said longitudinal axis (P).

10. System (1) for manufacturing at least one closing device (10) of the type that can be constrained to a container (100) for pourable products at a pierceable portion (101) thereof, said closing device (10) comprising a collar (11) combinable with said pierceable portion, a cap (12) combinable with the outer surface (11a) of said collar (11), and a movable cutting element (13) for severing, once the device is assembled, said pierceable portion (101), said system (1) comprising at least one injection molding plant (2) for molding said collar (11), said cutting element (13) and said cap (12) of said at least one closing device (10) and at least one assembling unit (3) for assembling said collar (11), said cutting element (13) and said cap (12), for forming said closing device (10), **characterized by** comprising a robotized transferring unit (4) for transferring said collar (11), said cutting element (13) and said cap (12) of said at least one closing device (10) from said molding plant (2) directly to said one assembling unit (3) .

11. System according to claim 10, **characterized in that** said collar (11), said cutting element (13) and said cap (12) of said at least one closing device (10) are transferred from said molding plant (2) to said assembling unit (3) in a time interval of less than 120 sec.

12. System according to claim 10 or 11, **characterized in that** said molding plant (2) comprises at least one press (30) having at least one fixed element (31) and one or more elements (32) movable, with respect to said at least one fixed element, between a first open position (P1) of said press (30), for allowing the extraction of said collar (11), said cap (12) and said cutting element (13) from said at least one press (30), and a closed position (P2) of said press (30), for allowing the injection molding of said collar (11), said cap (12) and said cutting element (13), said at least one fixed element (31) and/or said one or more movable elements (32) defining, with the press in the closed position, at least one first cavity (41) for molding said collar (11) having a substantially cylindrical geometry, at least one second cavity (42) for molding said cap (12) having a substantially cylindrical geometry, and at least one third cavity (43) for molding said cutting element (13) having a substantially cylindrical geometry, said at least one first cavity (41), said at least one second cavity (42) and said at least one third cavity (43) being arranged so that to be concentrically aligned to one another along at least one longitudinal axis (L), wherein said one or more movable elements (32) move, with respect to said at least one fixed element (31), along a linear direction (X) parallel to, or coincident with said longitudinal axis (L), said longitudinal axis (L) being coincident with the longitudinal axis (P) of said cap, said cutting element and said collar, which are arranged concentrically to one another once made by means of said molding plant (2).

13. System according to claim 10 or 11, **characterized in that** said molding plant (2) comprises at least one press (30) having at least one fixed element (31) and one or more elements (32) movable, with respect to said at least one fixed element, between a first open position (P2) of said press (30), for allowing the extraction of said collar (11), said cap (12) and said cutting element (13) from said at least one press (30), and a closed position (P1) of said press (30), for allowing the injection molding of said collar (11), said cap (12) and said cutting element (13), said at least one fixed element (31) and/or said one or more movable elements (32) defining, with the press in the closed position, at least one first cavity (41) for molding, in a semi-finished configuration, said collar (11) and said cutting element which have a substantially cylindrical geometry, and at least one second cavity (42) for molding said cap (12) having a substantially cylindrical geometry, said at least one first cavity (41) and said at least one second cavity (42) being arranged so that to be concentrically aligned to one another along at least one longitudinal axis (L), wherein said one or more movable elements (32) move, with respect to said at least one fixed element (31), along a linear direction (X) parallel to, or coincident with said longitudinal axis (L), said longitudinal axis (L) being coincident with the longitudinal axis (P) of said cap, said cutting element and said collar, which are arranged concentrically to one another once made by means of said molding plant (2).

14. System according to one or more of claims 10 to 13, **characterized in that** said transferring unit (4) comprises a plurality of gripping arms (51, 52, 53) for grabbing said collar, said cutting element and said cap and to displace them through at least one first linear movement (L1,L1') outside of said molding plant (2), for transferring said collar, said cutting element and said cap from said molding plant to said assembling unit, wherein said cutting element, said cap and said collar remain concentrically aligned to one another along said longitudinal axis (P).

15. System according to one or more claims 10 to 14, **characterized in that** said assembling unit (3) comprises means for assembling said collar, said cutting element and said cap for forming said closing device by means of a reciprocal pushing operation, wherein said push occurs through a second linear movement (L2) between said collar, said cutting element and said cap, wherein said cutting element, said collar and said cap are concentrically aligned to one another along said longitudinal axis (P).

16. System according to claim 14 and/or 15, **characterized in that** said gripping arms and/or said assembling means are adapted to rotate said collar, said cutting element and said cap around said longitudinal axis (P), for allowing their reciprocal orientation.
